# EUROPÄISCHE PATENTSCHRIFT

(11) **EP 1 296 081 B1**
(45) Veröffentlichungstag und Bekanntmachung des Hinweises auf die Patenterteilung: **07.09.2005**
(21) Anmeldenummer: 01122795.6
(22) Anmeldetag: 21.09.2001
(51) Int. Cl.: F16D 69/04

(54) **Bremsbacke für Scheibenbremsen**
Brake pad for disc brake
Garniture de frein pour frein à disque

(43) Veröffentlichungstag der Anmeldung: 26.03.2003
(73) Patentinhaber: TMD Friction GmbH, 51381 Leverkusen (DE)
(72) Erfinder: Severit, Petra, Dr., 51469 Bergisch Gladbach (DE); Brecht, Jörg, Dr., 51519 Odenthal (DE)
(74) Vertreter: Dallmeyer, Georg

(56) Entgegenhaltungen:
- EP-A- 1 024 310
- DE-A- 19 706 123
- DE-C- 3 843 901
- GB-A- 2 262 320
- US-A- 4 230 207

## Beschreibung

Die Erfindung betrifft eine Bremsbacke für Scheibenbremsen, die einen Belagträger mit oder ohne Kleberbeschichtung und einen Reibbelag mit oder ohne Verbindungsschicht aufweist.

Derartige Bremsbacken werden für Scheibenbremsen, z.B. für den Einsatz in Kraftfahrzeugen und Schienenfahrzeugen, benötigt.

Aus "Bremsbeläge für Straßenfahrzeuge" (Verlag moderne Industrie, 1991) S. 20 ff sind Scheibenbremsbeläge bekannt, die aus einer Belagträgerplatte als Belagträger, einer darauf aufgebrachten Kleberschicht, einer Zwischenschicht als Verbindungsschicht zwischen Reibmaterial und Belagträger und einer Reibschicht aufgebaut sind.

Die auf dem Belagträger aufgebrachte Kleberschicht hat die Aufgabe eine feste Bindung zwischen dem Reibbelag oder der Zwischenschicht und dem Belagträger zu bewirken. Es soll vorrangig eine Spaltbildung zwischen Belagträger und Reibbelag vermieden werden, um die gefürchtete Unterrostung durch Eindringen von Feuchtigkeit in den Spalt zu vermeiden. Die Unterrostung hat zur Folge, daß sich im Extremfall der Reibbelag von der Trägerplatte gänzlich ablöst und dadurch ein Versagen der Bremse möglich ist.

Durch höhere Motorleistungen in den Kraftfahrzeugen und höheren gefahrenen Geschwindigkeiten und damit auch zunehmenden Bremsleistungen wird die Bremsbacke höheren Temperaturbelastungen ausgesetzt. Diesen Temperaturbelastungen halten Klebersysteme nicht mehr stand, insbesondere vor dem Hintergrund, daß Bremsbacken heute nahezu die doppelte Verschleißlebensdauer haben und länger in der Bremse verweilen. Die Gefahr von Spaltbildung über die lange Benutzungszeit wird dadurch erhöht.

Versuche haben gezeigt, dass bei Bremsbacken, die einer Schwerbeanspruchung ausgesetzt sind, d.h. dem eigentlichen Belastungsfall beim Bremsprozess, die maximale Werkstoffbelastung an den Aussenkanten des Reibbelages auftritt. Durch diesen Effekt ist die Verbindungsfuge besonders hoch belastet und neigt zur Spaltbildung in die dann Feuchtigkeit eindringen kann. Durch die Feuchtigkeit kann es zum einen am metallischen Belagträger zu Rosterscheinungen kommen oder zum anderen an den metallischen Inhaltsstoffen des Reibbelages. Hat dieser Rostungsprozess erst einmal eingesetzt, kann dieser den gesamten Reibbelag unterrosten und zur Trennung zwischen Reibbelag und Trägerplatte führen.

Aus der US 4799579 und WO 00/49308 sind Bremsbacken bekannt, die einen Reibbelag in Kombination mit Belagträgern auf denen zusätzliche Verankerungsmittel, wie aus dem Belagträgermaterial herausgearbeitete Vorsprünge und Haken oder aufgebrachte Drahtgitter aufgebracht sind, aufweisen. Alle diese zusätzlichen Massnahmen sollen die Verankerung zwischen Reibbelag und Belagträger erhöhen und eine Trennung des Reibbelages von der Trägerplatte vermeiden. Das Reibmaterial des Reibbelages wird auf den Belagträger verpresst, dabei fliesst das Reibmaterial hinter die Verankerungselemente die Hinterschneidungen bilden.

Der Reibbelag ist zwar grossflächig über die formschlüssige Verbindung auf dem Belagträger befestigt, doch da die Verankerungssysteme nicht voll in die Randzone des Reibbelages ragen bzw. sie durchdringen,besteht auch hier die Gefahr der Spaltbindung in der Randzone und eine Unterrostung entlang der Oberfläche der Vorsprünge. Die Abscherebene liegt dann lediglich über der Ebene der Verankerungselemente. Des weiteren verursacht das Aufbringen oder Ausbilden von Verankerungselementen aufgrund aufwendiger additiver Verarbeitungsschritte zusätzliche Herstellkosten.

Die DE-A-197 06 123 beschreibt einen Bremsbelag für Scheibenbremsen mit einer metallischen Rückenplatte, auf der ein Reibbelag befestigt ist, wobei die Rückenplatte in Umfangsrichtung mindestens zwei Abschnitte mit unterschiedlicher Rückenplattendicke aufweisen soll. Damit soll bei kostengünstiger Herstellung eine Gewichtsreduzierung der metallischen Rückenplatte in Verbindung mit einer Verbesserung der thermischen Eigenschaften und der Haftung des Reibbelages herbeigeführt werden.

Zur Versteifung der Rückenplatte sind unterschiedliche Sickenmuster vorgeschlagen, die durch Umformung einer verhältnismäßig dünnen Rückenplatte entstehen. Es handelt sich dabei um wellenförmige Verformungen der dünnen Rückenplatte, nicht dagegen um in der Rückenplatte vorgesehene Nuten.

Der Erfindung liegt somit die Aufgabe zugrunde, eine Scheibenbremsbacke zu schaffen, bei der die Unterrostungsgefahr und ein Versagen der Bremse aus diesem Grunde sicher vermieden wird bei Verwendung eines kostengünstigen Belagträgers.

Die Aufgabe wird durch die Merkmale des Anspruchs 1 gelöst, wobei der Belagträger reibbelagseitig eine ringförmige Nut aufweist.

Die Nut verläuft entlang des Aussenrandes, d.h. der Klebefuge, des Reibbelages. Es ist ebenfalls vorgesehen, dass das Reibmaterial des Reibbelages in die Nut reicht. Durch diese Massnahmen wird die Klebefuge aus dem Bereich der maximalen Werkstoffbelastung herausgeführt.

Das Reibmaterial reicht in der Nut bis an die Nutaussenkante.

In einer weiteren Ausgestaltung der Erfindung ist vorgesehen, dass die Nut eine Breite von 1 mm bis 10 mm aufweist. Des weiteren kann die Tiefe der Nut 1 mm bis 5 mm aufweisen.

Alternativ ist weiterhin vorgesehen, dass die Nut V-förmig ausgestaltet oder als Hohlkehle ausgestaltet ist.

Vorzugsweise ist vorgesehen, dass die erfindungsgemässe Bremsbacke einen Belagträger aufweist der eine Metallplatte mit einer Dicke von 3 mm bis 50 mm und einer reibbelagseitig umlaufenden Nut ist.

Vorzugsweise ist vorgesehen, dass die erfindungsgemässe Bremsbacke einen Belagträger aufweist der eine Keramikplatte mit einer Dicke von 3 mm bis 50 mm und einer reibbelagseitig umlaufenden Nut ist.

Vorzugsweise ist vorgesehen, dass die erfindungsgemässe Bremsbacke einen Belagträger aufweist der eine Kunststoffplatte mit einer Dicke von 3 mm bis 50 mm und einer reibbelagseitig umlaufenden Nut ist.

Ausführungsbeispiele der Erfindung werden anhand der Zeichnungen nachstehend erläutert:
Es zeigen:
- Fig. 1: eine Scheibenbremsbacke im Schnitt
- Fig. 2: ein Belagträger in der Draufsicht

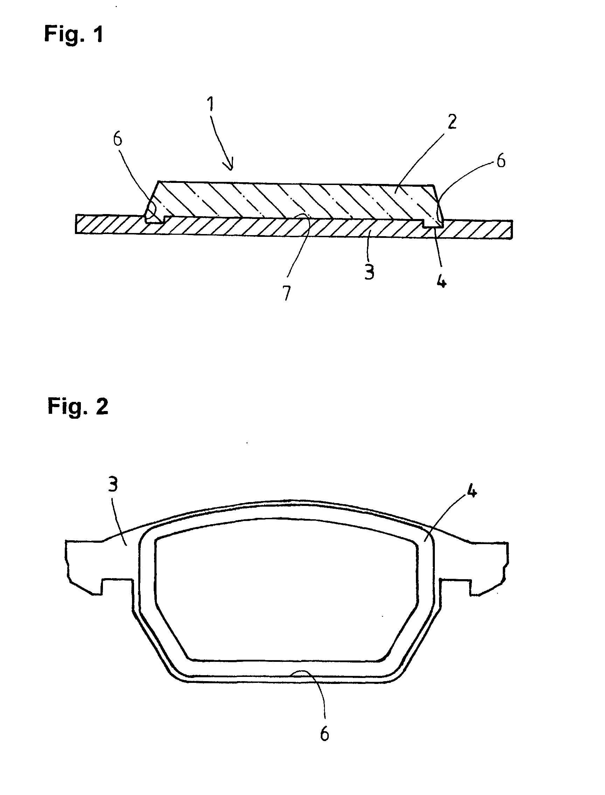

In Figur 1 ist eine Scheibenbremsbacke 1 dargestellt, die einen Reibbelag 2 und eine metallische Belagträgerplatte 3 als Belagträger aufweist. In der Regel wird die Belagträgerplatte 3 vor dem Verbindungsprozeß, einem Preßprozeß, reibbelagseitig mit einem Kleber beschichtet, der die Verbindung mit dem Reibbelag herstellt, da nicht alle Reibmaterialien genügende Haft- bzw. Klebeeigenschaften haben. Grundsätzlich können Reibmaterialien auch ohne Kleber auf Belagträger gepreßt werden. In manchen Fällen ist auch die Verwendung eine Zwischenschicht notwendig, um die zum Teil gegensätzlichen Eigenschaften wir Sprödigkeit, Materialdehnung etc. auszugleichen.

In der Trägerplatte 3 ist eine ringförmige Nut 4 angeordnet, wobei der Reibbelag 2 die Nut 4 ausfüllt. Der Reibbelag 2 schließt mit der Außenkante 6 der Nut 4 ab, so daß die für die Spaltbildung kritische Grenzebene zwischen Reibbelag 2 und Belagträger 3 in die Nut verlegt ist. Die Klebefuge wird dadurch aus dem Bereich der maximalen Werkstoffbelastung herausgeführt und eine Spaltbildung sicher vermieden. Die Tiefe der Nut 4 beträgt vorzugsweise zwischen 2mm und 5mm, aber je nach Dicke des Belagträgers 3 kann die Tiefe der Nut 4 zwischen 2mm und 50mm variieren. Dies kommt insbesondere bei schweren Lastkraftwagen zum tragen.

In Figur 2 wird eine Belagträgerplatte 3 dargestellt, die mit einer erfindungsgemäßen umlaufenden Nut 4 ausgestattet ist. Die Breite der Nut 4 beträgt 4mm, ist aber variierbar im Bereich von 1mm bis 10mm. Die Nut 4 ist so angeordnet, daß der Reibbelag 3 mit der Außenkante 6 abschließt.

## Patentansprüche

1. Bremsbacke für Scheibenbremsen, die einen Belagträger (3) mit oder ohne Kleberbeschichtung und einen Reibbelag (2) mit oder ohne einer Verbindungsschicht aufweist, **dadurch gekennzeichnet, dass** der Belagträger (3) reibbelagseitig eine ringförmig umlaufende Nut (4) aufweist, und dass zur Vermeidung einer Spaltbildung zwischen dem Reibbelag (2) und dem Belagträger (3) die Nut in dem Belagträger (3) entlang des Außenrandes (5) des Reibbelags (2) umläuft, wobei der Reibbelag (2) die Nut (4) ausfüllt und bis an die Nutaussenkante (6) und nicht darüber hinaus reicht.

2. Bremsbacke nach Anspruch 1, **dadurch gekennzeichnet, dass** die umlaufende Nut (4) eine Breite von 1 mm bis 10 mm aufweist.

3. Bremsbacke nach einem der Ansprüche 1 oder 2 **dadurch gekennzeichnet, dass** die umlaufende Nut (4) eine Tiefe von 1 mm bis 5 mm aufweist.

4. Bremsbacke nach einem der Ansprüche von 1 bis 3 **dadurch gekennzeichnet, dass** die umlaufende Nut (4) V-förmig gestaltet ist.

5. Bremsbacke nach einem der Ansprüche von 1 bis 3 **dadurch gekennzeichnet, dass** die umlaufende Nut (4) eine Hohlkehle ist.

6. Bremsbacke (1) nach einem der Ansprüche von 1 bis 5 **dadurch gekennzeichnet, dass** der Belagträger (3) eine Metallplatte mit einer reibbelagseitig umlaufenden Nut (4) und mit einer Dicke von 3 mm bis 50 mm ist.

7. Bremsbacke (1) nach einem der Ansprüche von 1 bis 5 **dadurch gekennzeichnet, dass** der Belagträger (3) eine Keramikplatte mit einer umlaufenden Nut (4) und mit einer Dicke von 3 mm bis 50 mm ist.

8. Bremsbacke (1) nach einem der Ansprüche von 1 bis 5 **dadurch gekennzeichnet, dass** der Belagträer (3) eine Kunststoffplatte mit einer umlaufenden Nut (4) und mit einer Dicke von 3 mm bis 50 mm ist.

## Claims

1. Brake jaw for disc brakes, comprising a lining support (3) with or without adhesive coating and a friction lining (2) with or without a bonding layer, **characterized in that** the lining support (3) has an annularly extending groove (4) on the side facing the friction lining, and that to avoid the forming of a gap between the friction lining (2) and the lining support (3), the groove (4) in the lining support (3) extends along the outer edge (5) of the friction lining (2), the friction lining (2) filling the groove (4) and extending up to the outer edge (6) of the groove but not beyond.

2. Brake jaw of claim 1, wherein the circumferentially extending grove (4) has a width of 1 mm to 10 mm.

3. Brake jaw of one of claims 1 or 2, wherein the circumferentially extending groove (4) has a depth of 1 mm to 5 mm.

4. Brake jaw of one of claims 1 to 3, wherein the circumferentially extending groove (4) is V-shaped.

5. Brake jaw of one of claims 1 to 3, wherein the circumferentially extending groove (4) is a gorge.

6. Brake jaw (1) of one of claims 1 to 5, wherein the lining support (3) is a metal plate with a circumferentially extending groove (4) on the side facing the friction lining and having a thickness of 3 mm to 50 mm.

7. Brake jaw (1) of one of claims 1 to 5, wherein the lining support (3) is a ceramic plate with a circumferentially extending groove (4) and having a thickness of 3 mm to 50 mm.

8. Brake jaw (1) of one of claims 1 to 5, wherein the lining support (3) is a plastics plate with a circumferentially extending groove (4) and having a thickness of 3 mm to 50 mm.

## Revendications

1. Mâchoire de frein pour freins à disque qui comporte un support de garniture (3) avec ou sans revêtement adhésif et une garniture de friction (2) avec ou sans couche de liaison, **caractérisée en ce que** le support de garniture (3) comporte du côté de la garniture de friction une gorge annulaire (4), et **en ce que** pour empêcher la formation d'un espace entre la garniture de friction (2) et le support de garniture (3) la gorge s'étend dans le support de garniture (3) le long du bord extérieur (5) de la garniture de friction (2), la garniture de friction (2) remplissant la gorge (4) et s'étendant jusqu'au bord extérieur (6) de la gorge et non au-delà de celui-ci.

2. Mâchoire de frein selon la revendication 1,
**caractérisée en ce que** la gorge annulaire (4) a une largeur de 1 mm à 10 mm.

3. Mâchoire de frein selon la revendication 1 ou 2, **caractérisée en ce que** la gorge annulaire (4) a une profondeur de 1 mm à 5 mm.

4. Mâchoire de frein selon l'une des revendications 1 à 3, **caractérisée en ce que** la gorge annulaire (4) est conformée en V.

5. Mâchoire de frein selon l'une des revendications 1 à 3, **caractérisée en ce que** la gorge annulaire (4) est une cannelure.

6. Mâchoire de frein (1) selon l'une des revendications 1 à 5, **caractérisée en ce que** le support de garniture (3) est une plaque métallique ayant une épaisseur de 3 mm à 50 mm et comportant une gorge (4) s'étendant circulairement du côté de la garniture de friction.

7. Mâchoire de frein (1) selon l'une des revendications 1 à 5, **caractérisée en ce que** le support de garniture (3) est une plaque de céramique ayant une épaisseur de 3 mm à 50 mm et comportant une gorge (4) s'étendant circulairement.

8. Mâchoire de frein (1) selon l'une des revendications 1 à 5, **caractérisée en ce que** le support de garniture (3) est une plaque en matière plastique ayant une épaisseur de 3 mm à 50 mm et comportant une gorge (4) s'étendant circulairement.
